# EUROPEAN PATENT SPECIFICATION

(11) **EP 3 062 612 B1**
(45) Date of publication and mention of the grant of the patent: **08.12.2021**
(21) Application number: 14793910.2
(22) Date of filing: 07.10.2014
(51) Int. Cl.: A01F 25/20, A01K 5/02

(54) **METHOD AND DEVICE FOR LOOSENING ANIMAL FEED**
VERFAHREN UND VORRICHTUNG ZUM AUFLOCKERN VON TIERFUTTER
PROCÉDÉ ET DISPOSITIF POUR AÉRER DU FOURRAGE

(30) Priority: 01.11.2013 NL 2011721
(43) Date of publication of application: 07.09.2016
(73) Proprietor: Lely Patent N.V., 3147 PB Maassluis (NL)
(72) Inventor: BUIJS, Martinus Cornelis Johannes, NL-3147 PA Maassluis (NL); KOORN, Maarten, NL-3123 CP Schiedam (NL)
(74) Representative: Octrooibureau Van der Lely N.V.
(86) International application number: PCT/NL2014/050692
(87) International publication number: WO 2015/065172

(56) References cited:
- EP-A1- 0 395 321
- WO-A1-2013/157931
- WO-A1-2013/157934

## Description

The present invention relates to a method and device for loosening animal feed.

Autonomous feeding systems, such as for example the Lely Vector^{™}, comprise a feed-storage location with one or more heaps of animal feed, in particular bales of animal feed, and a grab bucket for carrying out a feed-loading action at a feed-mixing installation or at a mobile feed-distributing means, such as a feed wagon, under the control of a control unit. The feed-loading action comprises gripping an amount of animal feed, based on a feed order received by the control unit, from a heap of animal feed at the feed-storage location using the grab bucket, moving the grab bucket with the amount of animal feed to and loading the feed-mixing installation or the feed-distributing means by depositing the amount of animal feed at a feed-loading location. The control unit controls the grab bucket on the basis of the required amount of feed. This amount is dispensed in one or more gripping actions to the feed-mixing installation or to the feed-distributing means which are provided with weighing means. The amount of animal feed which is gripped is determined by controlling the gripping depth of the grab bucket, and the feed-mixing installation or the feed-distributing means measures how much animal feed has been received.

WO 2013/157934 A1 describes an autonomous feeding system.

In many cases, such a method works well with this known system. However, on occasion, the accuracy with which animal feed is being gripped is undesirably low. In particular with bales of stalky plants, such as a bale of hay or grass, it may happen that the grab bucket grips animal feed, but that the amount which is actually delivered to the feed-mixing installation or the feed-distributing means deviates significantly from the amount of gripped animal feed which was expected on the basis of the gripping depth. The reason for this is that, in addition to the amount of animal feed gripped in the grab bucket, there may also be a suspended piece of feed under the grab bucket which is carried along as well. As a result, it is difficult to grip and deliver the correct amount of animal feed of a feed order and in any case takes more time. In addition, the risk of the animal feed which has been carried along outside the grab bucket being lost due to the horizontal displacement of the grab bucket towards the feed-mixing installation or the feed-distributing means is then greater, which not only causes loss of animal feed, but also soils the feed-storage location and surrounding area.

It is an object of the present invention to provide a method which reduces this drawback, or at least offers the user a usable alternative.

This object is achieved by a method as claimed in claim 1, in particular by providing a loosening action in addition to the feed-loading action, wherein the loosening action comprises the following steps:
a) gripping animal feed using the grab bucket;
b) raising the grab bucket to a predetermined minimum height, as a result of which at least some of the animal feed is carried along; and
c) releasing the animal feed which was carried along, irrespective of the amount of animal feed which was carried along, wherein the releasing takes place at the first location.

The inventor has found that adding a loosening action in addition to the feed-loading action is advantageous with regard to increasing the accuracy during the feed-loading action, as this loosens the animal feed and consequently less animal feed is carried along unnecessarily with an amount of animal feed which is gripped. As a result thereof, for example less animal feed hangs outside the grab bucket, or less often, which makes it possible to predict the amount of animal feed which is gripped in the grab bucket in one gripping action during a feed-loading action more accurately. In addition, the risk of losing animal feed or of soiling by animal feed is reduced.

Incidentally, actions are known within the already known feeding systems which, at first sight, resemble a loosening action, but nevertheless fundamentally differ therefrom. If, during a feed-loading action, the amount of gripped animal feed is so large that the system is at risk of becoming overloaded or at least that a predetermined amount of animal feed is exceeded, the animal feed will be released again by the grab bucket. However, such a method differs from the proposed loosening action in quite a few respects:
1) Thus, with the known method, there is no distinguishable separate loosening action which results in a greater degree of gripping accuracy during a future feed-loading action than prior to the loosening action, in the prior art, the action of releasing the animal feed only takes place during a feed-loading action;
2) In addition, with the feed-loading action, the action of releasing the animal feed is actually dependent on the amount of animal feed which was carried along; and
3) Furthermore, with the feed-loading action, releasing the animal feed takes place as soon as a measured amount of animal feed exceeds the predetermined amount of animal feed and the animal feed which was carried along is thus not carried along to a predetermined minimum height which is required in order to loosen the animal feed.

The steps as claimed in claim 1 are thus not intended to fill a feed-mixing installation or a feed-mixing wagon. Loosening the animal feed preferably takes place in the case of plants which have long stalks, such as for example grass, hay, which are stored, for example, as round or square bales or are supplied as blocks cut out of bunker silos or silaged feed.

Providing a separate loosening action makes it possible for the user to choose the moment when the loosening action is to be performed. In an embodiment, the loosening action is carried out after a feed order has been received by the control unit, but before the associated feed-loading action is carried out. This has the advantage that the loosening is carried out shortly before the feed-loading action, as a result of which the freshness of the animal feed is not significantly affected by the loosening.

In an alternative embodiment, the loosening action is carried out between current feed orders. A feed order is current once it has been received by the control unit and the associated feed-loading action has not yet been completed. In other words, a feed order is current from the moment it is received by the control unit until the moment that an associated feed-loading action has been completed.

An advantage of this embodiment is that the time the feed order was received and completion of the feed-loading action is not adversely affected by the loosening action, since the loosening action can then be carried out when the grab bucket does not have to carry out any other actions, as a result of which the feed-providing capacity is not significantly limited by this method.

In an embodiment, the sequence of steps associated with the loosening action, i.e. at least the gripping, raising and releasing, is carried out a plurality of times. In other words, the loosening action is repeated a plurality of times for the same feed-storage location. This has the advantage that the number of loosening actions which is carried out can be adapted to the amount of entangled animal feed. Carrying out the loosening action once therefore does not have to have the desired result in the case of a slightly larger amount of entangled animal feed. The desired result may only be achieved after carrying out the loosening action five, seven or even ten times.

The number of times an amount of animal feed is subjected to a loosening action may, for example, be fixed for each type of animal feed, but may also be adapted on the basis of a parameter value which is directly or indirectly related to the degree of entanglement. The degree of entanglement of an amount of entangled animal feed can be measured or estimated by measuring or determining the parameter value, in which case the control unit in this embodiment is preferably configured to subject the amount of entangled animal feed to loosening actions for as long as it takes to bring the degree of entanglement below a certain level.

The parameter value may be a surface parameter of a surface of a heap of animal feed, in particular an average or maximum roughness of this surface which may be determined, for example, by means of a 3D image or an average laser scanning height. The parameter value may also relate to the fiber length, degree of entanglement, density, feed type, bale shape (round or square) and the motor power of the hoisting motor for raising the grab bucket.

In an embodiment, the predetermined minimum height from which the animal feed which is carried along is released increases as the number of loosening actions increases if a loosening action is carried out a plurality of times in succession for the same amount of animal feed at the same feed-storage location.

In an example, not according to the claimed invention, the grab bucket performs a horizontal displacement between raising the grab bucket and releasing the animal feed which is carried along. In other words, the releasing takes place at a second location which differs from the first location, with the second location being free from feed-mixing means and feed-conveying means. This has the advantage that animal feed which has already been loosened and animal feed which is still entangled can be separated from each other, thus producing a supply of already loosened animal feed at a separate feed-storage location. As a result thereof, not only can the amount of animal feed which is still entangled be loosened more efficiently, but a more accurate amount of feed can be taken from the animal feed which has already been loosened in the case of a feed order, even if the loosening action for the total amount of animal feed has not yet finished.

In an embodiment, the method comprises a feed-loading action, comprising the following steps:
a) gripping an amount of animal feed using a grab bucket, on the basis of a feed order received by the control unit;
b) moving the grab bucket in at least a horizontal direction to a feed-loading location; and
c) depositing the amount of animal feed at the feed-loading location.

In an embodiment, the feed-loading action is carried out on loose or loosened animal feed.

In an embodiment, the animal feed is first stored in a feed-storage location, in which the loosening action is preferably carried out while the animal feed is in the feed-storage location, and in which the animal feed is displaced by the feed-loading action from the feed-storage location to the feed-loading location.

The amount of animal feed which can be gripped by the grab bucket depends, inter alia, on the composition of the animal feed and settings, such as the degree of opening of the grab bucket and the gripping depth of the grab bucket into the animal feed. There is therefore a maximum amount of loosened animal feed which can be gripped by the grab bucket. It may be advantageous for the loosening action to adjust the settings of the grab bucket during gripping in such a manner that these correspond to the gripping of small amounts. As a result thereof, the loosening action may have to be performed more often in order to loosen a certain amount of animal feed, but the efficiency and/or the desired end result is greater. Preferably, the grab bucket is adjusted for gripping the animal feed in such a way that it grips at most 50% of the maximum, preferably at most 35% of the maximum and more preferably at most 25% of the maximum. The settings which are required to achieve this are thus an advantageous combination of the degree of opening of the grab bucket and the gripping depth.

Before gripping the animal feed, the grab bucket is preferably first positioned above a (local) maximum of the height of the amount of entangled animal feed in a horizontal direction, after which the grab bucket moves down until the desired gripping depth has been reached. Preferably, the gripping depth is in this case determined with reference to the height of the amount of entangled animal feed determined earlier. Obviously, the grab bucket is opened to a desired degree before the grab bucket comes into contact with the animal feed. However, the point in time at which the grab bucket is opened in order to grip is not relevant to the invention.

Incidentally, it should be noted here that the loosening action and the feed-loading action do not have to be carried out by the same grab bucket. In an embodiment, it is possible for a plurality of grab buckets to be present, in which case it is possible to carry out a loosening action and a feed-loading action in parallel. It is possible to use a grab bucket substantially for loosening actions and another grab bucket substantially for feed-loading actions, for example because the grab bucket used for feed-loading actions can grip larger amounts of animal feed simultaneously than the grab bucket which is used for loosening actions.

The invention also relates to a feed-gripping device for loosening animal feed, according to a method as claimed in one of the claims 1-6, wherein the feed-gripping device comprises:
- a frame;
- a grab bucket which is vertically displaceable with respect to the frame; and
- a control unit.

In this case, the control unit is configured to have the grab bucket carry out a loosening action. The loosening action comprises the following steps:
a) gripping the animal feed at a first location using the grab bucket;
b) raising the grab bucket to a predetermined minimum height, as a result of which at least some of the animal feed is carried along; and
c) releasing the animal feed which was carried along, irrespective of the amount of animal feed which was carried along, wherein the releasing takes place at the first location.

In an embodiment, the frame comprises a grab bucket carrier which is horizontally displaceable in at least one, and preferably two directions, to which grab bucket carrier the grab bucket is attached so as to be displaceable in the vertical direction.

The feed-gripping device preferably comprises a propelling device for displacing the grab bucket carrier in a horizontal direction and an actuator for displacing the grab bucket in a vertical direction.

In an embodiment, the feed-gripping device comprises a sensor system having one or more sensors for determining at least one parameter value of a surface of an amount of animal feed, in which case the parameter value may be:
- the height of the amount of animal feed;
- the local height of the amount of animal feed vertically below the grab bucket;
- the average height of the amount of animal feed;
- the local average height of the amount of animal feed vertically below the grab bucket;
- an at least 1-dimensional height profile of the amount of animal feed;
- a 2-dimensional height profile of the amount of animal feed;
- an average or maximum roughness of the surface of the amount of animal feed;
- fiber length;
- degree of entanglement (possibly to be determined by the motor power required to raise the grab bucket);
- density; and
- bale shape (round or square).

In order to determine one or more parameter values, the sensors may comprise a height meter, distance meter, optical camera, 3D sensor, 3D camera and/or a controllable laser sensor with distance-sensing means.

In an embodiment, the feed-gripping device comprises sensors for determining the amount of animal feed which is carried along by the grab bucket, in particular a weighing sensor for determining the weight of a gripped amount of animal feed which is preferably fitted in or on the grab bucket or grab bucket carrier.

The invention also relates to an animal-feeding system provided with a feed-gripping device as claimed in one of claims 7-13, in particular an animal-feeding system for feeding cattle, in particular cows or dairy cattle.

The invention will be described below in a non-limiting manner with reference to the figures, in which case similar parts will be denoted by the same reference symbol, and in which:
- Fig. 1: diagrammatically shows an animal-feeding system at a cattle farm which is provided with a feed-gripping device according to an embodiment of the invention;
- Fig. 2: diagrammatically shows a feed-gripping device according to an embodiment of the invention;
- Fig. 3: shows a block diagram of a method according to an embodiment of the invention;
- Fig. 4: shows a block diagram of a method according to another embodiment of the invention; and
- Fig. 5: shows a number of steps of a loosening action according to the invention.

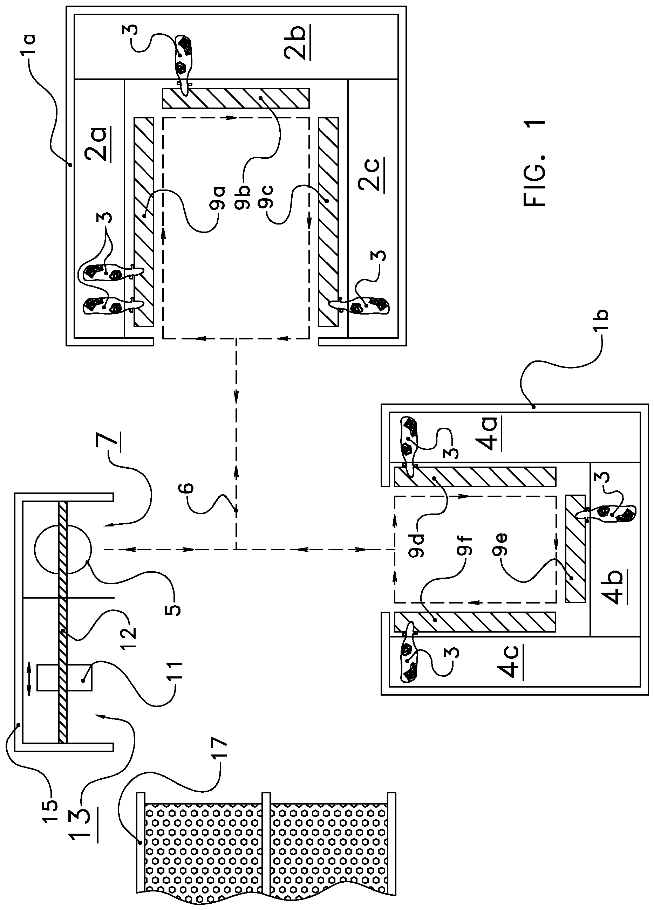

Fig. 1 diagrammatically shows a cattle farm with animal sheds 1a, 1b which house animals 3, in this case cattle. In order to feed the animals, a feeding system is provided comprising a feed-mixing wagon 5 which transports animal feed between a feed-loading location 7 and feeding locations 9a-9f near the animals 3. In this case, the feed-mixing wagon may be autonomous so that it automatically follows a route along the feeding locations and delivers animal feed.

Animal feed is delivered to the feeding locations on the basis of a feed order. The feed-mixing wagon 5 cooperates with a feed-gripping device 11 in order to fill the feed-mixing wagon with the animal feed of the feed order. The feed-gripping device 11 is positioned in a feed kitchen 15, as are the feed-loading location 7 and a feed-storage location 13. The feed-gripping device is configured to transport animal feed, on the basis of a feed order, from the feed-storage location 13 to the feed-loading location 7 in order to fill the feed-mixing wagon with the ordered animal feed.

In order to ensure freshness, the animal feed is preferably initially stored in a long-term storage location, such as for example a bunker silo 17 for stalky plants. From the long-term storage location, the animal feed can be placed in the feed-storage location 13 in bales or blocks. In addition, it is possible to use bales of animal feed which have been formed using a baler. Such known bales are round or square bales. Animal feed made up of long stalks is often entangled, as a result of which a feed-gripping device according to the prior art cannot always meter the animal feed with a sufficient degree of accuracy. In addition, in particular with bales produced by balers, the entangled animal feed is tightly compressed, as a result of which it is more difficult to grab an amount of animal feed, as the animal feed gripped by the grab bucket also pulls more animal feed out of the bale.

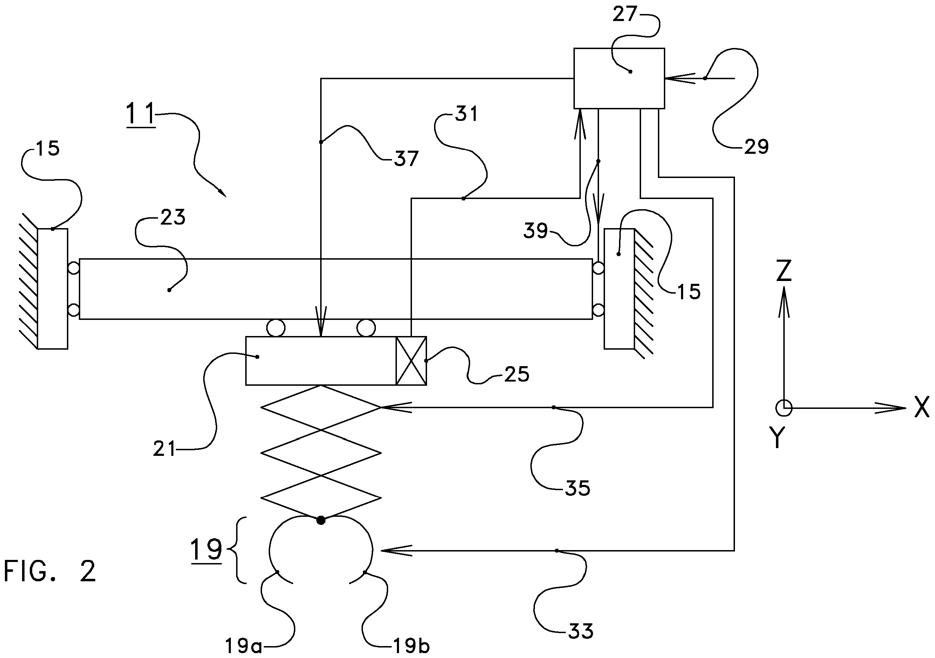

Fig. 2 diagrammatically shows the feed-gripping device 11 according to Fig. 1 in more detail. Feed-gripping device 11 comprises a grab bucket 19 with two grab bucket parts 19a, 19b which can be driven so as to be rotatable about an axis of rotation parallel to a Y direction which is at right angles to the plane of the drawing in order to open and close the grab bucket.

The grab bucket 19 is attached to a grab bucket carrier 21 in such a way that the grab bucket is displaceable in the vertical direction, that is to say in the Z direction, with respect to the grab bucket carrier 21. Grab bucket carrier 21 is part of a frame.

In this embodiment, grab bucket carrier 21 is displaceable in two horizontal directions. This is achieved by attaching the grab bucket carrier 21 to frame 23 in such a way that the grab bucket carrier 12 is horizontally displaceable in the X direction with respect to frame 23. Frame 23 is in turn attached to feed kitchen 15 (see Fig. 1) in such a way that frame 23 is horizontally displaceable in the Y direction with respect to feed kitchen 15. Other embodiments with travelling frames, gantry cranes and such are of course also possible.

The feed-gripping device according to this embodiment is provided with a sensor 25 which is attached to the grab bucket carrier 21. In this case, the sensor 25 is a 3D camera configured to detect the height of an amount of animal feed and to detect an average and/or maximum roughness of the surface of the amount of animal feed.

The feed-gripping device furthermore comprises a control unit 27 which controls the feed-gripping device on the basis of internal and external input. In this case, external input comes from the control system of the feeding system which can issue a feed order 29. This external input can be passed onto the control unit of the feed-gripping device directly or via the feed-mixing installation or the feed-distributing wagon. In this case, internal input comes from sensor 25 by means of signal 31. Signal 31 preferably provides both a first parameter value according to the height of an amount of animal feed and a second parameter value according to the average or maximum roughness of the surface of the amount of animal feed to the control unit 27.

It should be noted that all signal lines illustrated in the figures may be both wire connections and wireless connections. The invention is thus not limited to a certain type of signal transmission.

The control unit 27 also comprises a plurality of outputs which correspond to the various driving systems which are required to position the grab bucket 19 and to open or close the grab bucket.

For opening and closing, the control unit 27 provides an actuating signal 33 to the corresponding actuator which is configured to open and close the grab bucket. In order to position the grab bucket in the vertical direction, the control unit 27 provides an actuating signal 35 to the corresponding actuator which is configured to move the grab bucket in the vertical direction with respect to the grab bucket carrier. In order to position the grab bucket in the horizontal plane, the control unit provides two actuating signals 37, 39 to a propelling device comprising an actuator for moving the grab bucket carrier 21 in the X direction with respect to the frame 23 and an actuator for moving the frame 23 in the Y direction with respect to the feed kitchen 15.

The control unit 27 is configured to carry out a loosening action and is configured to carry out a feed-loading action. These actions will be explained in general terms and in more detail below.

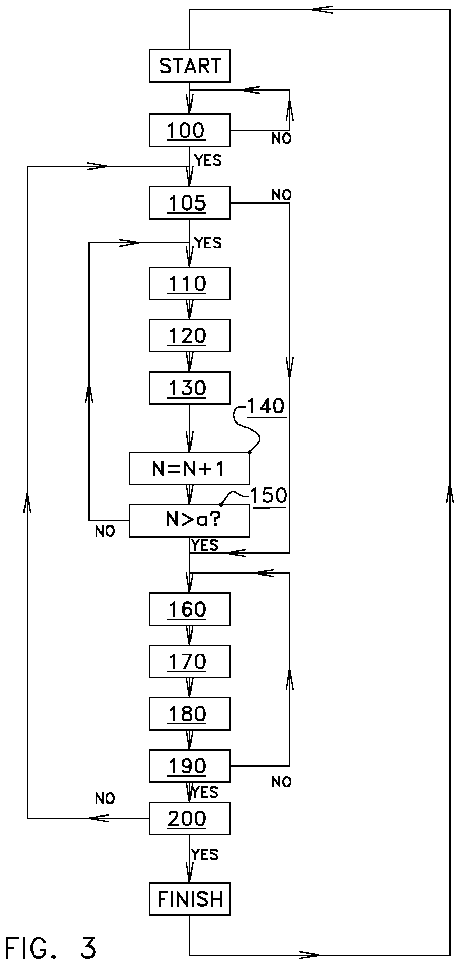

Fig. 3 diagrammatically shows a first method which can be carried out by the control unit of a feed-gripping device according to the invention. The first method starts with determining the presence or absence of a feed order in step 100. If no feed order (see indication NO in Fig. 3) has been received from, for example, a feed-mixing wagon 5 as described for the embodiment in Fig. 1, no action will be performed by the feed-gripping device.

When a feed order is placed (see indication YES in Fig. 3), the control unit will first determine whether a loosening action is required for the requested type of animal feed in step 105. If it is not required (indicated by the indication NO), then the method will continue with step 160 which forms part of a feed-loading action and is described later. If it is required (indicated by the indication YES), the method will start with a loosening action which in this case consists of the following steps:

| | |
|---|---|
| step 110: | gripping animal feed at a first location using the grab bucket; |
| step 120: | raising the grab bucket to a predetermined minimum height, as a result of which at least some of the animal feed is carried along; and |
| step 130: | releasing the animal feed which was carried along, irrespective of the amount of animal feed which was carried along. |

In the case of the example from Fig. 1, the first location is in the feed-storage location 13.

Gripping, raising and subsequently releasing again is preferably carried out in such a way that the animal feed is pulled apart, so that the animal feed can subsequently, during a feed-loading action, be gripped with a higher degree of accuracy than prior to the loosening action.

Depending on the type of animal feed, the amount of animal feed and/or the desired settings, the control unit may be configured to carry out the loosening action more often. To this end, the control unit keeps track of the number of loosening actions N and compares it to a certain value a. After a loosening action has been performed, N is therefore increased by 1 (see step 140 in Fig. 3). The new value for N is then compared to the set value for a in step 150 and when it is exceeded (indicated by the indication YES), the control unit continues with step 160. If N is not greater than a (indicated by the indication NO), the method returns to step 110 and a new loosening action is carried out. *a* may for example be set as the number of loosening actions which have to be carried out. If the initial value of N is then 1, the control unit will automatically continue with step 160 after it has performed the loosening action for a times.

Step 160 is the first step of a feed-loading action in which an amount of loosened animal feed is gripped in accordance with the received feed order. The gripped animal feed is then displaced by the grab bucket in step 170 to a feed-loading location and is delivered to, for example, a feed-mixing wagon in step 180.

After the animal feed has been delivered at the feed-loading location, for example by weighing in the feed-mixing wagon, or at any other point in time, the amount of animal feed which has been dispensed during the feed-loading action is preferably determined. This amount is compared to the desired amount of the animal feed in step 190. If the amount of animal feed which has been delivered is still not sufficient according to the feed order (indicated by the indication NO), the control unit will return to step 160 in order to carry out another feed-loading action in order to make up the difference. If the amount of animal feed which has been delivered is sufficient (indicated by the indication YES), the control unit will check if the feed order has been completed in step 200.

A feed order may consist of a plurality of different types of animal feed, a so-called ration. A feed-loading action is generally carried out according to the type of animal feed, so that step 200 is in fact used to determine whether all requested types of animal feed of the feed order have been delivered. If this is the case (indicated by the indication YES), then the feed order has been completed (see the indication FINISH) and the system returns to START to wait for the next feed order. It should be noted here that it is possible to randomize the order of the various types, resulting in a kind of premixing. This can be taken into account in a so-called recipe, in which case step 200 is used to check if a recipe rule has been carried out, irrespective of the type of animal feed.

As long as not all types of animal feed have been delivered yet (indicated by the indication NO), the control unit will continue with step 105 which is used to check whether or not a type of animal feed which is still missing requires a loosening action as described above.

With the method according to Fig. 3, a loosening action, if required, takes place between receiving a feed order and carrying out a feed-loading action, so that the freshness of the animal feed is not significantly affected by the loosening action which could be the case if the time between the loosening action and the feed-loading action increases.

In an embodiment, as N is smaller than or equal to *a*, the predetermined height from which the animal feed which has been carried along is released increases with the increasing value of N during the plurality of times the loosening action is performed.

Step 105 only serves to check the type of animal feed, for example stalky plants or pellets, in which case a loosening action is, for example, always or usually performed in the case of stalky plants and never or hardly ever for pellets, and in which a fixed value a is defined for each type of stalky plant for the number of loosening actions which is to be performed. However, it is also possible for the decision made in step 105 to be partly based on an output signal of a sensor, on the basis of which it is possible to determine a parameter value which makes it possible to determine or estimate the degree of entanglement. If the degree of entanglement of the animal feed is below a predetermined threshold, it may be decided not to perform any loosening action(s). Incidentally, whether or not a loosening action is necessary may also be on the basis of previous loosening actions which may have been carried out and without determining a parameter value. If a previous loosening action has produced a supply of loosened animal feed which is sufficient to complete the feed order, no new loosening action has to be performed, in spite of the type of animal feed.

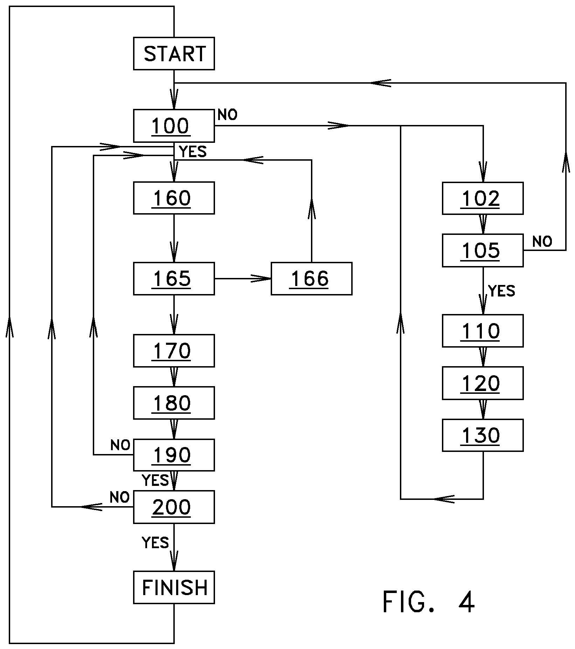

Fig. 4 shows a method according to another embodiment of the invention. Some of the steps of this method are similar to corresponding steps from the method according to Fig. 3. Therefore, these steps will not be described in great detail and the reader is referred to the description of Fig. 3 for a more elaborate explanation.

The method starts by determining the presence or absence of a feed order in step 100. If there is no feed order, the method continues with step 102. With this method, a sensor is used to scan the animal feed in a feed-storage location so that a decision can be made in step 105 whether or not a loosening action has to be carried out on an amount of animal feed. Scanning of at least part of the animal feed in the feed-storage location is performed in step 102.

If the decision is made in step 105, on the basis of the scan performed in step 102, that no loosening action is required (indicated by the indication NO), the method will return to step 100. If no feed order comes in, the steps 102 and 105 can be used to check on a regular basis if new animal feed which requires a loosening action has been placed in the feed-storage location. The regularity can be set, for example, and is otherwise not relevant to the invention.

If the decision is made in step 105, on the basis of the scan performed in step 102, that a loosening action is required (indicated by the indication YES), the method will carry out a loosening action by successively performing the steps 110, 120 and 130. Subsequently, the method returns to step 102 and a new scan of the animal feed is carried out. This makes it possible to monitor the effect of the loosening action. If the effect of the loosening action is sufficient, that is to say the degree of entanglement of the animal feed has dropped below a certain level as a result of the loosening action, no new loosening action will be initiated. If the entanglement is still above a certain level, another loosening action will be carried out.

When a feed order is received by the control unit (indicated by the indication YES in step 100), a feed-loading action is carried out by an amount of animal feed being gripped in step 160. This method comprises a sensor, for example a weighing sensor in the grab bucket, by means of which the amount of animal feed which is gripped can be measured. This sensor performs a measurement in step 165 and determines if the amount of animal feed, for example the weight, exceeds a predetermined maximum value. If this is not the case (indicated by the indication NO), the feed-loading action will be completed by performing the steps 170 and 180.

If the amount of animal feed exceeds the predetermined maximum value (indicated by the indication YES), the gripped animal feed will be released in step 166 and the system returns to step 160 in order to grip another amount of animal feed.

If a feed-loading action is not abandoned prematurely and reaches completion, step 190 is used to check whether there is a sufficient amount of this type of animal feed and step 200 is used to determine if still more ingredients are required for the feed order.

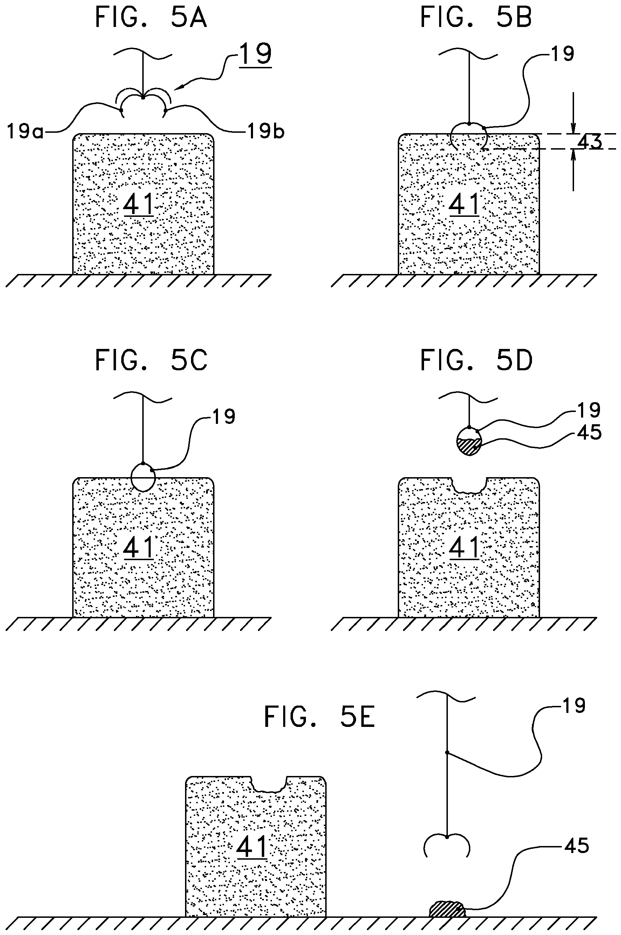

Fig. 5 shows an example of a loosening action not according to the invention in five images.

In image 5A, a grab bucket 19 with grab bucket parts 19a, 19b which is part of a feed-gripping device according to, for example, Fig. 2 is positioned above a bale of animal feed 41. In this embodiment, the grab bucket is only half open, for example. The maximum opening of the grab bucket is illustrated by means of dotted grab bucket parts.

In image 5B, the grab bucket is lowered until the grab bucket parts reach a certain gripping depth 43. In image 5C, the grab bucket is then closed in order to grip a certain amount of animal feed at a first location. Then, the grab bucket is raised in such a way that a part 45 of the amount of animal feed 41 is pulled loose by the weight of the bale of animal feed and carried along by the grab bucket (see image 5D). Image 5E shows that the animal feed which has been carried along is deposited next to the bale at a second location, free from feed-mixing means or feed-conveying means. Subsequently, the method according to the images 5A to 5E can be carried out again, so that the bale 41 becomes smaller and the heap of animal feed which has been pulled loose becomes larger, as a result of which the animal feed is loosened and, in addition, the animal feed which has been loosened is separated from the animal feed which is still to be loosened. As a result thereof, it is possible to carry out a feed-loading action, for example, on the amount 45 and not on the bale itself, thus improving the accuracy.

In another embodiment, the animal feed which has been pulled loose is returned to the bale from which it was pulled. This has the advantage that no additional space is required in the feed kitchen for animal feed which has been pulled loose.

## Claims

1. A method for loosening animal feed, wherein the method comprises having at least one grab bucket (19) carry out a loosening action under the control of a control unit (27), wherein the loosening action comprises the following steps:
a) gripping (step 110) the animal feed at a first location using the grab bucket;
b) raising (step 120) the grab bucket to a predetermined minimum height, as a result of which at least some of the animal feed is carried along; and
c) releasing (step 130) the animal feed which was carried along, irrespective of the amount of animal feed which was carried along, wherein the releasing takes place at the first location.

2. The method as claimed in claim 1, wherein the loosening action is carried out a plurality of times, preferably in close succession.

3. The method as claimed in one or more of the preceding claims, wherein the (27), loosening action is carried out after a feed order has been received by the control unit but before the associated feed-loading action is carried out.

4. The method as claimed in one or more of claims 1 - 2, wherein the loosening action is carried out between two current feed orders, wherein a feed order is current from the moment it is received by the control unit (27) until the moment that an associated feed-loading action has been completed.

5. The method as claimed in one of the preceding claims, wherein the predetermined minimum height from which the animal feed which is carried along is released by the grab bucket (19) increases as the number of times that a loosening action is carried out for the same amount of animal feed increases.

6. The method as claimed in claim 1, comprising the step of determining a parameter value of the animal feed, wherein a loosening action is carried out based on the determined parameter value.

7. A feed-gripping device (11) for loosening animal feed, according to a method as claimed in one of the preceding claims, wherein the feed-gripping device comprises:
• a frame (23);
• a grab bucket (19) which is vertically displaceable with respect to the frame; and
• a control unit (27),
**characterized in that**
the control unit is configured to have the grab bucket carry out a loosening action,
wherein the loosening action comprises the following steps:
a) gripping (step 110) the animal feed at a first location using the grab bucket;
b) raising (step 120) the grab bucket to a predetermined minimum height, as a result of which at least some of the animal feed is carried along; and
c) releasing (step 130) the animal feed which was carried along, irrespective of the amount of animal feed which was carried along,
wherein the releasing takes place at the first location.

8. The feed-gripping device as claimed in Claim 7, wherein the frame (23) comprises a grab bucket carrier (21) which is horizontally displaceable in at least one, and preferably two directions, to which grab bucket carrier the grab bucket (19) is attached so as to be displaceable in the vertical direction.

9. The feed-gripping device as claimed in Claim 8, comprising a propelling device for displacing the grab bucket carrier (21) in a horizontal direction and an actuator for displacing the grab bucket (19) in a vertical direction.

10. The feed-gripping device (11) as claimed in one of the preceding claims 7-9, comprising a sensor (25) for determining at least one parameter value of a surface of an amount of animal feed, wherein the at least one parameter value is selected from the following list: the height of the amount of animal feed, the local height of the amount of animal feed below the grab bucket, the average height of the amount of animal feed, the local average height of the amount of animal feed below the grab bucket, an at least 1-dimensional height profile of the amount of animal feed, a 2-dimensional height profile of the amount of animal feed, and an average or maximum roughness of the surface of the amount of animal feed.

11. The feed-gripping device as claimed in claim 10, wherein the sensor comprises a height meter, distance meter, optical camera, 3D sensor, 3D camera and/or a controllable laser sensor.

12. The feed-gripping device as claimed in one of the preceding claims 7-11, comprising a sensor for determining the amount of animal feed which is carried along by the grab bucket (19).

13. The feed-gripping device as claimed in claim 12, wherein the sensor is a weighing sensor for determining an amount of animal feed which is gripped by the grab bucket (19).

14. An animal-feeding system comprising a feed-gripping device (11) as claimed in one of claims 7-13 and a feed kitchen (15) comprising at least an amount of animal feed at a first location.

## Patentansprüche

1. Verfahren zum Auflockern von Tierfutter, wobei das Verfahren umfasst, dass mindestens ein Greiferkübel (19) einen Auflockerungsvorgang unter der Steuerung einer Steuereinheit (27) ausführt, wobei der Auflockerungsvorgang die folgenden Schritte umfasst:
a) Greifen (Schritt 110) des Tierfutters an einer ersten Stelle unter Verwendung des Greiferkübels;
b) Anheben (Schritt 120) des Greiferkübels auf eine vorbestimmte Mindesthöhe, wodurch zumindest ein Teil des Tierfutters mitgenommen wird; und
c) Freigeben (Schritt 130) des mitgenommenen Tierfutters, unabhängig von der Menge an mitgenommenem Tierfutter, wobei das Freigeben an der ersten Stelle erfolgt.

2. Verfahren nach Anspruch 1, wobei der Auflockerungsvorgang eine Vielzahl von Malen, vorzugsweise in enger Folge, durchgeführt wird.

3. Verfahren nach einem oder mehreren der vorhergehenden Ansprüche, wobei der Auflockerungsvorgang durchgeführt wird, nachdem ein Fütterungsauftrag von der Steuereinheit (27) empfangen wurde, aber bevor der zugehörige Futterladevorgang durchgeführt wird.

4. Verfahren nach einem oder mehreren der Ansprüche 1 bis 2, wobei der Auflockerungsvorgang zwischen zwei aktuellen Fütterungsaufträgen durchgeführt wird, wobei ein Fütterungsauftrag von dem Zeitpunkt, an dem er von der Steuereinheit (27) empfangen wird, bis zu dem Zeitpunkt, an dem ein zugehöriger Futterladevorgang abgeschlossen ist, aktuell ist.

5. Verfahren nach einem der vorhergehenden Ansprüche, wobei die vorbestimmte Mindesthöhe, von der das mitgenommene Tierfutter vom Greiferkübel (19) freigegeben wird, mit zunehmender Anzahl der Male, die ein Auflockerungsvorgang für die gleiche Menge an Tierfutter durchgeführt wird, zunimmt.

6. Verfahren nach Anspruch 1, umfassend den Schritt des Bestimmens eines Parameterwertes des Tierfutters, wobei ein Auflockerungsvorgang auf der Grundlage des bestimmten Parameterwertes durchgeführt wird.

7. Futtergreifvorrichtung (11) zum Auflockern von Tierfutter gemäß einem Verfahren nach einem der vorhergehenden Ansprüche, wobei die Futtergreifvorrichtung folgende Elemente umfasst:
einen Rahmen (23);
einen Greiferkübel (19), der in Bezug auf den Rahmen vertikal verschiebbar ist; und
eine Steuereinheit (27),
**dadurch gekennzeichnet, dass**
die Steuereinheit dafür ausgelegt ist, den Greiferkübel einen Auflockerungsvorgang durchführen zu lassen, wobei der Auflockerungsvorgang die folgenden Schritte umfasst:
a) Greifen (Schritt 110) des Tierfutters an einer ersten Stelle unter Verwendung des Greiferkübels;
b) Anheben (Schritt 120) des Greiferkübels auf eine vorbestimmte Mindesthöhe, wodurch zumindest ein Teil des Tierfutters mitgenommen wird; und
c) Freigeben (Schritt 130) des mitgenommenen Tierfutters, unabhängig von der Menge an mitgenommenem Tierfutter, wobei das Freigeben an der ersten Stelle erfolgt.

8. Futtergreifvorrichtung nach Anspruch 7, wobei der Rahmen (23) einen Greiferkübelträger (21) umfasst, der horizontal in mindestens einer und vorzugsweise in zwei Richtungen verschiebbar ist, an dem der Greiferkübel (19) so befestigt ist, dass er in vertikaler Richtung verschiebbar ist.

9. Futtergreifvorrichtung nach Anspruch 8, umfassend eine Antriebsvorrichtung zum Verschieben des Greiferkübelträgers (21) in einer horizontalen Richtung und einem Stellglied zum Verschieben des Greiferkübels (19) in einer vertikalen Richtung.

10. Futtergreifvorrichtung (11) nach einem der vorhergehenden Ansprüche 7 bis 9, umfassend einen Sensor (25) zum Bestimmen mindestens eines Parameterwertes einer Oberfläche einer Menge an Tierfutter, wobei der mindestens eine Parameterwert aus der folgenden Liste ausgewählt ist: die Höhe der Menge an Tierfutter, die lokale Höhe der Menge an Tierfutter unter dem Greiferkübel, die durchschnittliche Höhe der Menge an Tierfutter, die lokale durchschnittliche Höhe der Menge an Tierfutter unter dem Greiferkübel, ein mindestens eindimensionales Höhenprofil der Menge an Tierfutter, ein zweidimensionales Höhenprofil der Menge an Tierfutter, und eine durchschnittliche oder eine maximale Rauheit der Oberfläche der Menge an Tierfutter.

11. Futtergreifvorrichtung nach Anspruch 10, wobei der Sensor einen Höhenmesser, einen Abstandsmesser, eine optische Kamera, einen 3D-Sensor, eine 3D-Kamera und/oder einen steuerbaren Lasersensor umfasst.

12. Futtergreifvorrichtung nach einem der vorhergehenden Ansprüche 7 bis 11, umfassend einen Sensor zum Bestimmen der vom Greiferkübel (19) mitgenommenen Menge an Tierfutter.

13. Futtergreifvorrichtung nach Anspruch 12, wobei der Sensor ein Wägesensor zum Bestimmen einer vom Greiferkübel (19) gegriffenen Menge an Tierfutter ist.

14. Tierfütterungssystem, umfassend eine Futtergreifvorrichtung (11) nach einem der Ansprüche 7 bis 13 und eine Futterküche (15), die mindestens eine Menge an Tierfutter an einer ersten Stelle umfasst.

## Revendications

1. Procédé d'ameublissement d'aliments pour animaux, le procédé comportant la réalisation par au moins une benne preneuse (19) d'une action d'ameublissement sous le contrôle d'une unité (27) de commande, l'action d'ameublissement comportant les étapes suivantes :
a) saisir (étape 110) les aliments pour animaux à un premier emplacement à l'aide de la benne preneuse ;
b) élever (étape 120) la benne preneuse jusqu'à une hauteur minimum prédéterminée, en conséquence de quoi au moins une partie des aliments pour animaux est emportée ; et
c) relâcher (étape 130) les aliments pour animaux qui ont été emportés, indépendamment de la quantité d'aliments pour animaux qui a été emportée, le relâchement ayant lieu au premier emplacement.

2. Procédé selon la revendication 1, l'action d'ameublissement étant réalisée une pluralité de fois, de préférence en succession rapprochée.

3. Procédé selon une ou plusieurs des revendications précédentes, l'action d'ameublissement étant réalisée après qu'une commande d'aliments a été reçue par l'unité (27) de commande mais avant que l'action associée de chargement d'aliments soit réalisée.

4. Procédé selon une ou plusieurs des revendications 1 à 2, l'action d'ameublissement étant réalisée entre deux commandes d'aliments en cours, une commande d'aliments étant en cours du moment où elle est reçue par l'unité (27) de commande jusqu'au moment où une action associée de chargement d'aliments a été achevée.

5. Procédé selon l'une des revendications précédentes, la hauteur minimum prédéterminée depuis laquelle les aliments pour animaux qui sont emportés sont relâchés par la benne preneuse (19) augmentant à mesure que le nombre de fois où une action d'ameublissement est réalisée pour la même quantité d'aliments pour animaux augmente.

6. Procédé selon la revendication 1, comportant l'étape consistant à déterminer une valeur de paramètre des aliments pour animaux, une action d'ameublissement étant réalisée d'après la valeur de paramètre déterminée.

7. Dispositif (11) de préhension d'aliments servant à ameublir des aliments pour animaux conformément à un procédé selon l'une des revendications précédentes, le dispositif de préhension d'aliments comportant :
• une charpente (23) ;
• une benne preneuse (19) qui peut être déplacée verticalement par rapport à la charpente ; et
• une unité (27) de commande,
**caractérisé en ce que** l'unité de commande est configurée pour faire réaliser une action d'ameublissement par la benne preneuse, l'action d'ameublissement comportant les étapes suivantes :
a) saisir (étape 110) les aliments pour animaux à un premier emplacement à l'aide de la benne preneuse ;
b) élever (étape 120) la benne preneuse jusqu'à une hauteur minimum prédéterminée, en conséquence de quoi au moins une partie des aliments pour animaux est emportée ; et
c) relâcher (étape 130) les aliments pour animaux qui ont été emportés, indépendamment de la quantité d'aliments pour animaux qui a été emportée, le relâchement ayant lieu au premier emplacement.

8. Dispositif de préhension d'aliments selon la revendication 7, la charpente (23) comportant un support (21) de benne preneuse qui peut être déplacé horizontalement dans au moins une, et de préférence deux directions, la benne preneuse (19) étant liée audit support de benne preneuse de façon à pouvoir être déplacée dans la direction verticale.

9. Dispositif de préhension d'aliments selon la revendication 8, comportant un dispositif de propulsion servant à déplacer le support (21) de benne preneuse dans une direction horizontale et un actionneur servant à déplacer la benne preneuse (19) dans une direction verticale.

10. Dispositif (11) de préhension d'aliments selon l'une des revendications 7 à 9 qui précèdent, comportant un capteur (25) servant à déterminer au moins une valeur de paramètre de la surface d'une quantité d'aliments pour animaux, la ou les valeurs de paramètre étant sélectionnées dans la liste suivante : la hauteur de la quantité d'aliments pour animaux, la hauteur locale de la quantité d'aliments pour animaux au-dessous de la benne preneuse, la hauteur moyenne de la quantité d'aliments pour animaux, la hauteur locale moyenne de la quantité d'aliments pour animaux au-dessous de la benne preneuse, un profil de hauteur de dimension au moins 1 de la quantité d'aliments pour animaux, un profil de hauteur de dimension 2 de la quantité d'aliments pour animaux, et une rugosité moyenne ou maximum de la surface de la quantité d'aliments pour animaux.

11. Dispositif de préhension d'aliments selon la revendication 10, le capteur comportant un instrument de mesure de hauteur, un instrument de mesure de distance, une caméra optique, un capteur 3D, une caméra 3D et/ou un capteur à laser commandable.

12. Dispositif de préhension d'aliments selon l'une des revendications 7 à 11 qui précèdent, comportant un capteur servant à déterminer la quantité d'aliments pour animaux qui est emportée par la benne preneuse (19).

13. Dispositif de préhension d'aliments selon la revendication 12, le capteur étant un capteur de pesée servant à déterminer une quantité d'aliments pour animaux qui est saisie par la benne preneuse (19).

14. Système d'alimentation d'animaux comportant un dispositif (11) de préhension d'aliments selon l'une des revendications 7 à 13 et un lieu (15) de préparation d'aliments comportant au moins une quantité d'aliments pour animaux à un premier emplacement.
